# NEUE EUROPÄISCHE PATENTSCHRIFT

(11) **EP 0 723 333 B2**
(45) Veröffentlichungstag und Bekanntmachung des Hinweises auf die Entscheidung über den Einspruch: **11.11.2009**
(45) Hinweis auf die Patenterteilung: 20.09.2000
(21) Anmeldenummer: 96100618.6
(22) Anmeldetag: 17.01.1996
(51) Int. Cl.: H02P 25/14

(54) **Ansteuerung für einen Elektromotor**
Electric motor control circuit
Circuit pour un moteur électrique

(30) Priorität: 19.01.1995 DE 19501430
(43) Veröffentlichungstag der Anmeldung: 24.07.1996
(73) Patentinhaber: Marquardt GmbH, 78604 Rietheim-Weilheim (DE)
(72) Erfinder: Bufe, Michael, D-78589 Dürbheim (DE); Kühnemundt, Gerhard, D-78576 Liptingen (DE); Knappe, Alexander, D-78604 Rietheim (DE)
(74) Vertreter: Eisele, Otten, Roth & Dobler

(56) Entgegenhaltungen:
- EP-A- 0 582 516
- EP-A1- 0 340 999
- EP-A1- 0 633 095
- DE-A- 3 524 563
- DE-A- 4 130 532
- US-A- 5 232 052
- US-A- 5 289 560

## Beschreibung

Die Erfindung betrifft ein Verfahren zum Ansteuern eines Elektromotors sowie eine dieses Verfahren verwirklichende Schaltungsanordnung. Ein solches Verfahren sowie ein zugehörige Schaltungsanordnung für einen wechselstromgespeisen Wechselstrommotor ist aus der DE 4 130 532 bekannt.

In vielen Anwendungsfällen ist es notwendig, Elektromotoren derart anzusteuern, daß sich der Rotor des Elektromotors mit einer einstellbaren Drehzahl bewegt. Solche Ansteuerschaltungen werden insbesondere in Elektrohandwerkzeugen, wie Bohrmaschinen, Schraubmaschinen o. dgl. verwendet.

Aus der DE-OS 35 24 563 ist eine Schaltungsanordnung zur Ansteuerung eines mit Wechselstrom gespeisten Elektromotors bekannt, die aus einer Steuerelektronik und einem als elektronischen Leistungsschalter diendenden Triac besteht. Der Triac wird von der Steuerelektronik derart geschaltet, daß über diesen veränderbare Pulse einer elektrischen Netzspannung, nämlich angeschnittene Sinusschwingungen, an den Elektromotor anlegbar sind. Dadurch wird der Elektromotor kontinuierlich mit der eingestellten Drehzahl betrieben.

Es gibt Einsatzfälle, bei denen der Elektromotor einerseits mit höheren Drehzahlen betrieben werden soll, andererseits jedoch ein punktgenaues Abschalten des Elektromotors gewünscht wird. Beispielsweise ist es bei einem Elektroschrauber wünschenswert, die Schraube mit möglichst großer Drehzahl einzudrehen. Um ein bündiges Eindrehen des Kopfes der Schraube zu gewährleisten, ist jedoch ein punktgenaues Abschalten des Elektromotors notwendig. Mit der bekannten Schaltungsanordnung ist insbesondere bei schweren Einsatzfällen, beispielsweise wenn die Schraube in harte Materialien einzudrehen ist, das rechtzeitige Abschalten des Elektromotors problembehaftet.

Der Erfindung liegt die Aufgabe zugrunde, ein Verfahren zum Betrieb eines Elektromotors anzugeben, mit dem ein punktgenaues Abschalten des Elektromotors ermöglicht wird. Weiter soll die bekannte Schaltungsanordnung weiterentwickelt werden, so daß sie zur Realisierung dieses Verfahrens geeignet ist.

Diese Aufgabe wird durch das Verfahren gemäß Anspruch 1 und durch eine Schaltungsanordnung gemäß Anspruch 6 gelöst.

Das erfindungsgemäße Verfahren sowie die zugehörige Schaltungsanordnung realisieren einen impulsartigen Betrieb des Elektromotors, bei dem dessen Rotor ruck- oder stoßartig mit der eingestellten Drehzahl bewegt wird. Das Verfahren eignet sich zur Ansteuerung beliebiger Elektromotoren, wie Universalmotoren, permanenterregte Motoren oder dergleichen. Weitere Ausgestaltungen der Erfindung sind Gegenstand der Unteransprüche.

Zur Ansteuerung eines gleichstromgespeisten Elektromotors kann eine Pulsweiten-Modulation und zur Ansteuerung eines wechselstromgespeisten Elektromotors eine Phasenanschnitt-Steuerung verwendet werden. Bei der Pulsweiten-Modulation werden Rechteckpulse variabler Weite und bei der Phasenanschnitt-Steuerung angeschnittene Sinusschwingungen als Pulse, jeweils mit einer ersten Frequenz f1 dem Elektromotor zugeführt. Diesen Pulsen können in Weiterbildung der Erfindung im impulsartigen Betrieb Pulspausen mit einer zweiten Frequenz f2, die kleiner als die erste Frequenz f1 ist, überlagert werden. Je nach Anwendungsfall kann die zweite Frequenz f2 einstellbar oder fest vorgegeben sein. Die Frequenz f2 kann vorteilhafterweise so gewählt werden, daß vorzugsweise ganze Vielfache der Pulse ausgeblendet werden, wobei das Ausblenden insbesondere durch geeignete Mittel synchronisiert zur ersten Frequenz f1 erfolgt. Die erste Frequenz f1 und zweite Frequenz f2 werden von geeignet ausgebildeten Oszillatoren erzeugt.

Der impulsartige Betrieb des Elektromotors kann in dessen gesamten Arbeitsbereich oder auch lediglich in bestimmten Teilen des Arbeitsbereichs erfolgen. Dabei ist es besonders vorteilhaft, wenn der impulsartige Betrieb bei Überschreitung gewisser voreingestellter Grenzwerte, beispielsweise bei Überschreitung eines bestimmten Drehmoments, selbsttätig einsetzt. Beispielsweise kann bei einem Elektroschrauber über eine Strommeßeinrichtung der Motorstrom erfaßt werden. Überschreitet dieser einen geeignet eingestellten Grenzwert, so wird das Vorliegen eines schwereren Schraubfalles signalisiert. Dadurch wird wiederum das Einsetzen des impulsartigen Betriebes bewirkt. Bei leichteren Schraubfällen, also solchen, bei denen die Motorstromaufnahme den Grenzwert nicht überschreitet, kann das Einsetzen des impulsartigen Betriebes völlig unterbleiben. Somit wird vermieden, daß der Benutzer einer unnötigen Maschinenvibration ausgesetzt ist, die im übrigen durch angepaßte Wahl der zweiten Frequenz f2 weitgehend gering gehalten werden kann.

Wird die erfindungsgemäße Schaltungsanordnung in Elektrohandwerkzeugen eingesetzt, so kann es vorteilhaft sein, die Schaltungsanordnung direkt in einem elektrischen Schalter zur Drehzahleinstellung für das Elektrohandwerkzeug anzuordnen. Selbstverständlich ist es auch möglich, die Schaltungsanordnung an zweckmäßiger Stelle im Gehäuse des Elektrohandwerkzeugs anzuordnen und von dort eine Verbindung mit dem elektrischen Schalter herzustellen.

Die mit der Erfindung erzielten Vorteile bestehen insbesondere darin, daß ein feinfühliges Arbeiten des Elektromotors auch bei hohen Drehzahlen ermöglicht ist, da der Elektromotor vom Benutzer punktgenau abgeschaltet werden kann. Wird beispielsweise ein Elektroschrauber nach dem erfindungsgemäßen Verfahren betrieben, so kann die Schraube im normalen Betrieb in das aufnehmende Material eingedreht werden. Erreicht der Schraubenkopf die Materialoberfläche, so wird in den impulsartigen Betrieb umgeschaltet, so daß die Schraube ruckweise weitergedreht wird. Der Benutzer kann dann den Elektroschrauber zwischen zwei ruckartigen Bewegungen mühelos abschalten, wenn der Schraubenkopf bündig in der Materialoberfläche ist. Durch die Verwendung des erfindungsgemäßen Verfahrens sinkt somit der Ausschuß bei der Bearbeitung von Werkstücken mit Hilfe von Elektrowerkzeugen.

Wird das entsprechende Elektrowerkzeug zum Schrauben verwendet, so gestattet das Verfahren ein flüssiges und bündiges Eindrehen der Schrauben. Andererseits ist auch ein Lösen festsitzender Schrauben erleichtert, da durch den impulsartigen Betrieb jeweils eine kurzzeitige Drehmomenterhöhung resultiert. Diese Drehmomenterhöhung bewirkt die Überwindung des hohen Haftreibungskoeffizienten bei festsitzenden Schrauben. Nach Lösen der Schraube kann unmittelbar in den herkömmlichen Betrieb zurückgeschaltet werden, da der Gleitreibungskoeffizient erheblich geringer als der Haftreibungskoeffizient ist.

Ausführungsbeispiele der Erfindung sind in den Zeichnungen dargestellt und werden im folgenden näher beschrieben. Es zeigen
- Fig. 1: eine Schaltungsanordnung zur Ansteuerung eines gleichstromgespeisten Elektromotors,
- Fig. 2: ein Spannungs(U)-Zeit(t)-Diagramm der Pulse für die Ansteuerung des Elektromotors nach Fig. 1 mit einer ersten Drehzahl,
- Fig. 3: ein Diagramm wie in Fig. 2, jedoch für die Ansteuerung des Elektromotors mit einer zweiten Drehzahl,
- Fig. 4: eine Schaltungsanordnung zur Ansteuerung eines wechselstrom gespeisten Elektromotors,
- Fig. 5: ein Spannungs(U)-Zeit(t)-Diagramm der Pulse für die Ansteuerung des Elektromotors aus Fig. 4 und
- Fig. 6: eine schematische Darstellung eines elektrischen Schalters zur Drehzahleinstellung von Elektromotoren in Elektrohandwerkzeugen in perspektivischer und teilweise aufgeschnittener Ansicht.

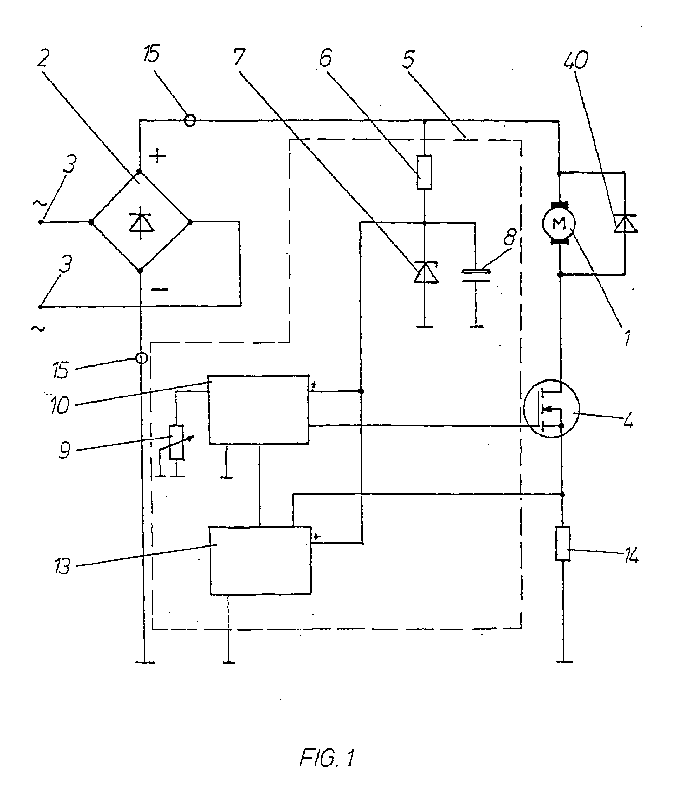

Eine Schaltungsanordnung zur Ansteuerung eines Elektromotors 1 mit einstellbarer Drehzahl ist in einer ersten Ausführungsform in Fig. 1 zu sehen. Es handelt sich beim Elektromotor 1 um einen Universalmotor, wie er insbesondere in handgeführten Elektrowerkzeugen, beispielsweise Bohrmaschinen, Schraubmaschinen o. dgl. eingesetzt wird.

Der Elektromotor 1 wird mittels Gleichstrom gespeist, wozu der mit einer Freilaufdiode 40 versehene Elektromotor 1 über einen Brückengleichrichter 2 an die Anschlüsse 3 für die Netzspannung angeschaltet ist. Zum Betrieb des Elektromotors 1 mit einer bestimmten Drehzahl ist im Motorkreis ein elektronischer Leistungsschalter 4 angeordnet, der wiederum von einer Steuerelektronik 5 angesteuert wird. Beim elektronischen Leistungsschalter handelt es sich um einen Feldeffekttransistor, nämlich einem MOS-FET. Selbstverständlich kann dafür auch ein bipolarer Transistor, ein IGBT o. dgl. verwendet werden. Die Steuerelektronik 5 wird vom Brückengleichrichter 2 mit der notwendigen Betriebsspannung versorgt, wozu in der Steuerelektronik 5 ein Widerstand 6, eine Zener-Diode 7 und ein Kondensator 8 angeordnet sind.

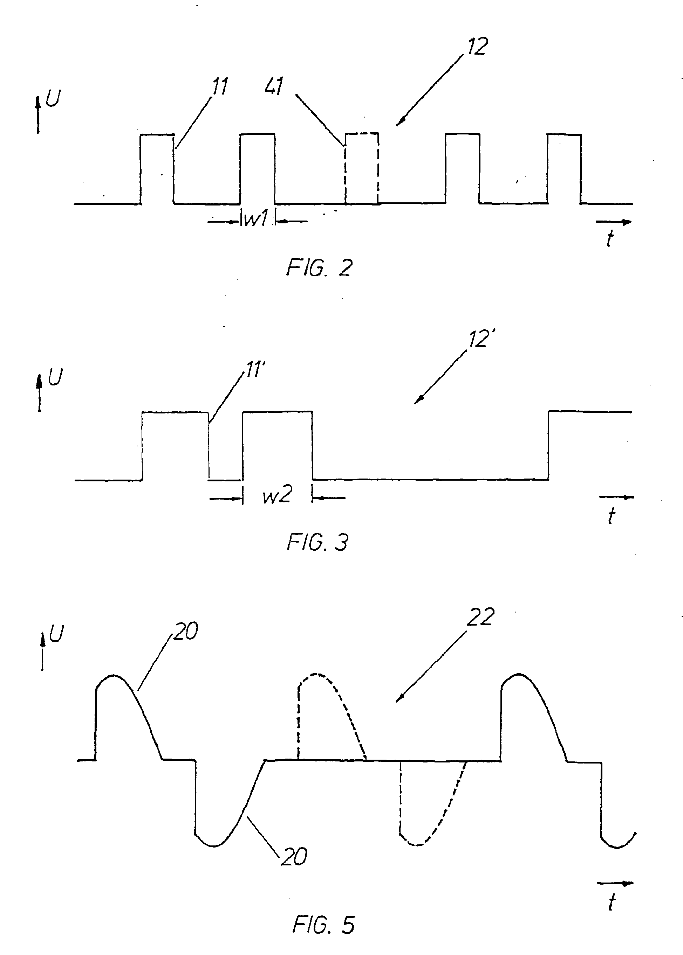

Die Steuerelektronik 5 arbeitet zur Drehzahleinstellung mit einer Pulsweiten-Modulation, wobei ein erster Oszillator 10 den elektronischen Leistungsschalter 4 mit einer ersten Frequenz f1 ansteuert, so daß der Elektromotor 1 mit in Fig. 2 gezeigten Pulsen 11 in Form von Rechteckpulsen der ersten Frequenz f1 beaufschlagt wird. An einem Potentiometer 9 in der Steuerelektronik 5 stellt der Benutzer manuell die gewünschte Drehzahl des Elektromotors 1 ein. Entsprechend dieser Voreinstellung am Potentiometer 9 wird der elektronische Leistungsschalter 4 durch den ersten Oszillator 10 in der Steuerelektronik 5 derart geschaltet, daß über den elektronischen Leistungsschalter 4 in der Weite veränderbare Pulse 11 der vom Brückengleichrichter 2 abgegebenen elektrischen Spannung U an den Elektromotor 1 anlegbar sind.

Wie in Fig. 2 gezeigt ist, besitzen die Pulse 11 eine Weite w1, womit der Elektromotor 1 mit einer gewissen Drehzahl n1 betrieben wird. Soll nun die Drehzahl des Elektromotors 1 vergrößert werden, so wird die Weite der Pulse 11 gemäß der Einstellung des Potentiometers 9 vergrößert. In Fig. 3 sind beispielsweise Pulse 11' mit einer größeren Weite w2 gezeigt, wodurch der Elektromotor 1 die größere Drehzahl n2 annimmt. Umgekehrt wird die Weite der Pulse 11 zur Verringerung der Drehzahl des Elektromotors 1 verkleinert. Die Frequenz f1, mit der der erste Oszillator 10 den elektronischen Leistungsschalter 4 ansteuert, bleibt jedoch konstant, wie anhand der Fig. 2 und 3 ersichtlich ist.

Wird der Elektromotor 1 derart durch Pulse 11, 11' angesteuert, so bewegt sich der Rotor des Elektromotors 1 kontinuierlich mit der zugehörigen Drehzahl n1, n2. Um den gewünschten impulsartigen Betrieb des Elektromotors 1 zu erzeugen, werden entsprechend dem erfindungsgemäßen Verfahren wenigstens Teile von wenigstens einzelnen Pulsen 11, 11' ausgeblendet. Dazu wird diesen Teilen eine Pulspause 12, 12' überlagert. Die Pulspause 12, 12' besitzt eine Spannung U der Größe Null, es handelt sich also um eine sogenannte Nullspannung. Dadurch bewegt sich der Rotor des Elektromotor 1 ruck- bzw. stoßartig mit der eingestellten Drehzahl n1, n2.

Zur Vereinfachung ist es dabei bevorzugt, ganze Vielfache der Pulse 11, 11' auszublenden. In Fig. 2 ist beispielsweise jeweils ein ganzer Puls 11 ausgeblendet und zwar der in der Fig. 2 dritte Puls 11. Zur Verdeutlichung ist dort der ausgeblendete Puls 11 gestrichelt gezeichnet. Während der Pulspause 12 liegt nicht die ansonsten vorhandene Versorgungsspannung U am Elektromotor 1 an, sondern dieser ist spannungslos geschaltet. In Fig. 3 sind jeweils zwei Pulse 11' durch eine Pulspause 12' ausgeblendet. Durch die Größe der Pulspause 12, 12' läßt sich die Art der Stöße im impulsartigen Betrieb einstellen.

Während die Pulse 11, 11' für den Elektromotor 1 eine erste Frequenz f1 besitzen, werden die Pulspausen 12, 12' mit einer zweiten Frequenz f2 den Pulsen 11, 11' überlagert. Dabei ist die zweite Frequenz f2 kleiner als die erste Frequenz f1. Zur Erzeugung der Pulspausen 12, 12' mit der Frequenz f2 besitzt die Steuerelektronik 5 Mittel zum Ausschalten des elektronischen Leistungsschalters 4. Wie in Fig. 1 näher zu sehen ist, bestehen diese Mittel aus einen zweiten Oszillator 13 zur Erzeugung eines Signals mit der zweiten Frequenz f2. Der zweite Oszillator 13 wirkt auf die Steuerelektronik 5 ein und zwar wird das Signal des zweiten Oszillators 13 zu dem in der Steuerelektronik 5 befindlichen ersten Oszillator 10 übertragen. Dadurch wird der erste Oszillator 10 taktweise mit der Frequenz f2 gesperrt, womit wiederum der elektronische Leistungsschalter 4 gesperrt ist, so daß letztendlich eine Pulspause 12, 12' am elektronischen Leistungsschalter 4 entsteht.

Die Überlagerung der Pulspausen 12, 12' erfolgt vorzugsweise synchronisiert zu den Pulsen 11, 11' mit der ersten Frequenz f1, beispielsweise synchron mit der ansteigenden Flanke 41 des Pulses 11, wie in Fig. 2 gezeigt ist. Das kann besonders dann vorteilhaft sein, wenn das Verhältnis der beiden Frequenzen f1, f2 nicht ganzzahlig oder lediglich annähernd ganzzahlig ist. Zur Synchronisation des zweiten Oszillators 13 mit dem ersten Oszillator 10 sind in der Steuerelektronik 5 entsprechende Mittel angeordnet. Derartige elektronische Mittel, die beispielsweise das Auftreten der Flanke 41 erkennen, sind an sich bekannt und brauchen hier nicht näher dargestellt zu werden. Eine Synchronisation kann insbesondere dann zweckmäßig sein, wenn wie bereits erwähnt ganze Vielfache der Pulse 11, 11' der ersten Frequenz f1 getaktet mit der zweiten Frequenz f2 ausgeblendet werden sollen.

Die Frequenz f2 des zweiten Oszillators 13 kann dem jeweiligen Verwendungszweck der Schaltungsanordnung angepaßt und fest vorgegeben sein. Es ist jedoch auch möglich, diese durch den Benutzer einstellbar vorzusehen, so daß der Benutzer die Frequenz f2 in gewissen Grenzen gemäß seinen Anforderungen variieren kann. Zur Einstellung der Frequenz f2 kann beispielsweise ein in der Fig. 1 nicht weiter gezeigtes Potentiometer verwendet werden.

Es kann vorgesehen sein, daß das Ausblenden der Pulse 11, 11' im gesamten Arbeitsbereich des Elektromotors 1 erfolgt. Alternativ kann das Ausblenden der Pulse 11, 11' auch lediglich in bestimmten Teilen des Arbeitsbereichs des Elektromotors 1 erfolgen. Für diesen Zweck kann vorgesehen sein, daß die Mittel zum Ausschalten des elektronischen Leistungsschalters 4 manuell durch den Benutzer zuschaltbar sind. Beispielsweise kann ein elektrischer Schalter am zweiten Oszillator 13 angeordnet sein, so daß der Benutzer diesen zu- oder abschalten kann.

In einer weiteren Ausführung sind die Mittel zum Ausschalten des elektronischen Leistungsschalters 4 selbsttätig zuschaltbar ausgebildet. Beispielsweise kann der impulsartige Betrieb des Elektromotors 1 lediglich bei Überschreitung eines gewissen am Rotor abgegebenen Drehmomentes, das dem Motorstrom proportional ist, benötigt werden. Für diesen Fall ist eine Strommeßeinrichtung für den Motorstrom angeordnet, die einen im Motorkreis befindlichen Widerstand 14, einen sogenannten Shunt-Widerstand enthält, wie in Fig. 1 zu sehen ist. Der durch den Widerstand 14 fließende Motorstrom erzeugt einen dem Motorstrom proportionalen Spannungsabfall am Widerstand 14. Dieser Spannungsabfall wird der Steuerelektronik 5 und zwar einer Auswerteschaltung im zweiten Oszillator 13 zugeführt. Überschreitet dieser von der Strommeßeinrichtung ermittelte Motorstrom einen voreingestellten Grenzwert, so werden die Mittel zum Ausschalten des elektronischen Leistungsschalters 4, nämlich der zweite Oszillator 13 aktiviert, womit der ruck- bzw. stoßartige Betrieb des Elektromotors 1 einsetzt.

Die in Fig. 1 gezeigte Schaltungsanordnung eignet sich auch für ein Akku-Elektrowerkzeug. Selbstverständlich entfallen dann der Brückengleichrichter 2 und die Anschlüsse 3 für die Netzspannung. Der Akku kann direkt mit den Anschlußpunkten 15 der Schaltungsanordnung verbunden werden. Gegebenenfalls können auch noch der Widerstand 6, die Zener-Diode 7 und der Kondensator 8 entfallen.

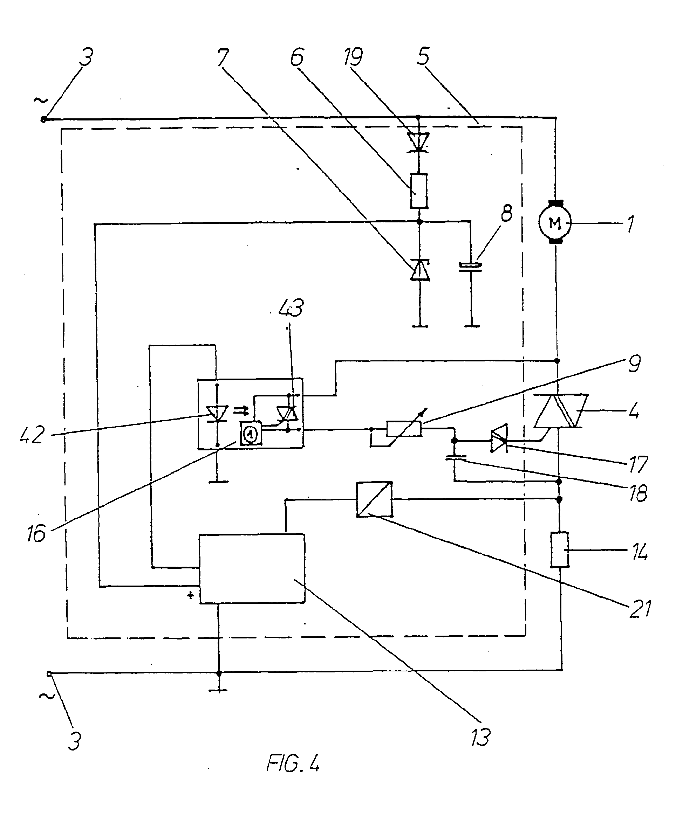

Als weitere Ausführungsform ist in Fig. 4 eine mit einer Phasenanschnitt-Steuerung zur Veränderung der Drehzahl arbeitende Schaltungsanordnung gezeigt, die zur Ansteuerung eines wechselstromgespeisten Elektromotors 1 dient. Der Elektromotor 1 ist an die Netzspannung über die Anschlüsse 3 angeschaltet. Im Motorkreis ist wiederum ein elektronischer Leistungsschalter 4 angeordnet, der aus einem Triac besteht. Die Steuerelektronik 5 zur Ansteuerung des elektronischen Leistungsschalters 4 enthält ein Potentiometer 9 zur Einstellung des Sollwertes für die Drehzahl. Die Steuerelektronik 5 wird über eine Diode 19, einen Widerstand 6, einen Kondensator 8 und eine Zener-Diode 7 mit der Betriebsspannung versorgt. Das Potentiometer 9 bildet mit einem Kondensator 18 und einem Diac 17 eine Zündschaltung, die beim Zündwinkel entsprechend der Einstellung des Potentiometers 9 ein Zündsignal an den als Triac ausgebildeten elektronischen Leistungsschalter 4 abgibt. Dadurch erhält der Elektromotor 1 in Fig. 5 gezeigte Pulse 20 in Form von angeschnittenen Sinusschwingungen. Diese Pulse 20 besitzen eine erste Frequenz f1, bei der es sich um die Frequenz der Netzspannung handelt, womit bei dieser Schaltungsanordnung insoweit kein erster Oszillator benötigt wird. Die Pulse 20 bewirken, daß sich der Rotor des Elektromotors 1 mit der eingestellten Drehzahl bewegt.

Wie in Fig. 4 weiter zu sehen ist, ist im Motorkreis wiederum ein der Messung des Motorstroms dienender Widerstand 14 angeordnet. Der Spannungsabfall am Widerstand 14 wird einer Auswerteschaltung 21 zugeführt, die wiederum bei Überschreitung eines voreingestellten Grenzwertes einen zweiten Oszillator 13 aktiviert. Ist der zweite Oszillator 13 eingeschaltet, so gibt dieser ein Signal mit einer zweiten Frequenz f2 ab, das der Zündschaltung für den elektronischen Leistungsschalter 4 zugeführt wird, womit die Zündschaltung mit einer Frequenz f2 gesperrt wird. Dadurch wird wiederum der elektronische Leistungsschalter 4 während Teilen von einzelnen Pulsen 20 ausgeschaltet. Es entstehen folglich Pulspausen 22 durch Ausblendung von Teilen von Pulsen 20, wie in Fig. 5 mit dem gestrichelt gezeichneten Puls dargestellt ist. In den Pulspausen 22 liegt am Elektromotor 1 keine Spannung an, so daß sich der Rotor des Elektromotors 1 mit der eingestellten Drehzahl ruck- oder stoßartig bewegt.

Auch bei dieser Schaltungsanordnung ist bevorzugt, ganze Vielfache der angeschnittenen Sinusschwingungen durch Pulspausen 22 der zweiten Frequenz f2 auszublenden. In Fig. 5 ist beispielsweise jeweils eine einzelne angeschnittenen Sinusschwingung ausgeblendet. Zur Synchronisation der Pulspausen 22 der zweiten Frequenz f2 mit den Pulsen 20 der ersten Frequenz f1, nämlich der Netzfrequenz, ist in der Steuerelektronik 5 ein Triac-Koppler 16 mit Nullpunktschaltung angeordnet, wie in Fig. 4 näher zu sehen ist.

Der Triac-Koppler 16 ist ein Baustein, der einen Optokoppler 42 sowie einen Triac 43 enthält. Ist der zweite Oszillator 13 nicht aktiviert, so ist der Optokoppler 42 angesteuert und dadurch der Triac 43 leitend geschaltet. Dadurch ist die Zündschaltung für den elektronischen Leistungsschalter 4 aktiv, womit der Elektromotor 1 im normalen Betrieb arbeitet. Wird der Oszillator 13 aktiviert, so wird der Optokoppler 42 mit der zweiten Frequenz f2 ausgeschaltet. Der Triac 43 ist bis zum nächsten Nulldurchgang der Netzspannung leitend und wird dann ausgeschaltet. Damit ist ab diesem Zeitpunkt die Zündschaltung für den elektronischen Leistungsschalter 4 inaktiv, womit eine Pulspause 22 vorliegt. Solange der Optokoppler 42 ausgeschaltet ist, kann der Triac 43 nicht zünden und die Zündschaltung für den elektronischen Leistungsschalter 4 bleibt somit inaktiv. Wird anschließend der Optokoppler 42 vom zweiten Oszillator 13 wieder eingeschaltet, so kann der Triac 43 wieder zünden und der elektronische Leistungsschalter 4 kann folglich wieder aktiviert werden. Wie man sieht synchronisiert der Triac-Koppler 16 somit das Signal des Oszillators 13 mit der Frequenz f2 auf den Nulldurchgang der Netzspannung und somit auf die Frequenz f1.

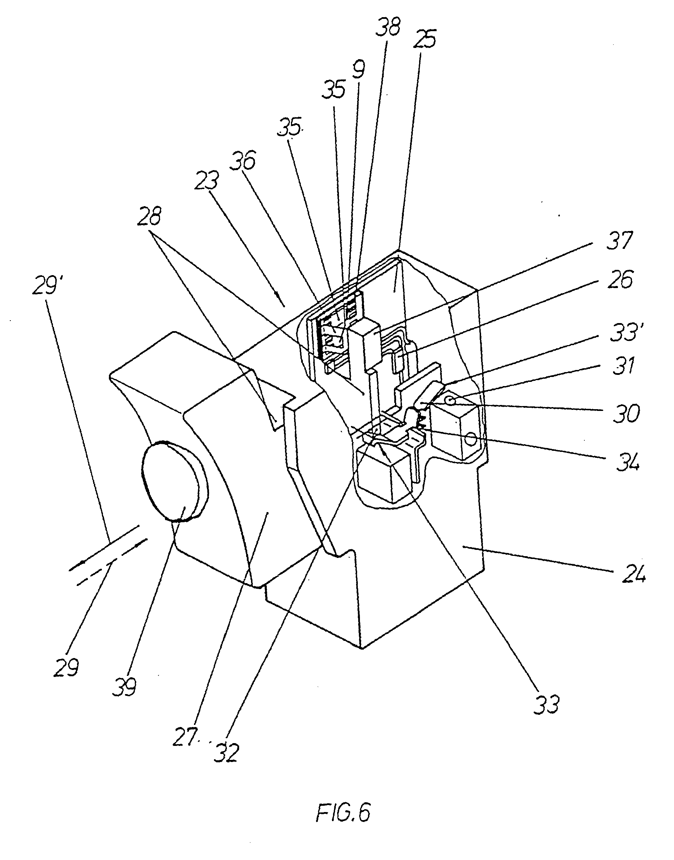

Die Schaltungsanordnungen, wie sie in den Ausführungsbeispielen nach den Fig. 1 und 4 gezeigt sind, können zweckmäßigerweise im Schalter für ein Elektrowerkzeug angeordnet sein. Ein derartiger elektrischer Schalter 23, der zur Drehzahleinstellung für das Elektrowerkzeug dient, ist in Fig. 6 schematisch dargestellt. Der Schalter 23 besitzt ein Schaltergehäuse 24, in welchem eine Leiterplatte 25 angeordnet ist. Auf der Leiterplatte 25 befinden sich die elektrischen und elektronischen Bauelemente 26, wie sie in den obigen Schaltungsanordnungen bereits beschrieben sind.

Beim Schalter 23 ist das als Drücker ausgebildete Betätigungsorgan 27 verstellbar am Schaltergehäuse 24 gelagert und besitzt einen daran befestigten, in das Innere des Schalters 23 führenden Betätigungsstößel 28. Das Betätigungsorgan 27 kann manuell in Richtung des Pfeiles 29 gegen eine nicht dargestellte Druckfeder bewegt werden, so daß es nach Loslassen wieder in die Ausgangsstellung entsprechend dem Pfeil 29' zurückkehrt.

Im Schalter 23 befindet sich ein Netzschalter zum Ein- und Ausschalten der Versorgungsspannung für das Elektrohandwerkzeug. Dieser Netzschalter besteht aus einer Kontaktwippe 30 und einem Anschlußkontakt 31. In unbetätigtem Zustand des Betätigungsorgans 27 wirkt ein am Betätigungsstößel 28 befindlicher Schaltnocken 32 auf das eine Ende 33 der Kontaktwippe 30 ein, so daß die Kontaktverbindung zwischen dem anderen Ende 33' der Kontaktwippe 30 und dem Anschlußkontakt 31 geöffnet ist. Bei Betätigung des Betätigungsorgans 27 gibt der Schaltnocken 32 das Ende 33 der Kontaktwippe 30 frei und eine Zugfeder 34 zieht das andere Ende 33' der Kontaktwippe 30 an den Anschlußkontakt 31, so daß die elektrische Verbindung am Netzschalter nunmehr geschlossen ist.

Das Potentiometer 9 zur Einstellung der Drehzahl des Elektromotors 1 setzt sich aus zwei Widerstandsbahnen 35, die auf einem Substrat 38 aufgebracht sind, und einem Schleifer 36 zusammen. Der Schleifer 36, der an einem im Innern des Schalters 23 am Betätigungsstößel 28 befindlichen Ansatz 37 befestigt ist, gleitet mit einem Ende auf den beiden auf der Leiterplatte 25 angeordneten Widerstandsbahnen 35. Durch Bewegung des Betätigungsorgans 27 wird der Schleifer 36 auf den Widerstandsbahnen 35 bewegt und damit der Widerstand des Potentiometers 9 entsprechend dem Verstellweg des Betätigungsorgans 27 verändert.

Am Betätigungsorgan 27 des Schalters 23 befindet sich ein Einstellknopf 39, mit dem ein Grenzwert für das vom Rotor des Elektromotors 1 ausgeübte Drehmoment vom Benutzer voreinstellbar ist. Selbstverständlich kann sich dieser Einstellknopf 39 auch an anderer, zweckmäßiger Stelle am Gehäuse des Elektrohandwerkzeugs befinden. Überschreitet das vom Elektromotor 1 erzeugte Drehmoment, das durch die Strommeßeinrichtung ermittelt wird, diesen Grenzwert, so geht die auf der Leiterplatte 25 befindliche Schaltungsanordnung zur Ansteuerung des Elektromotors 1 in die Betriebsart über, in der Teile von einzelnen Pulsen oder einzelne Pulse mit Pulspausen überlagert werden. In dieser anhand der Diagramme in den Fig. 2, 3 und 5 bereits beschriebenen Betriebsart bewegt sich der Rotor des Elektromotors 1 ruck- oder stoßartig, so daß ein impulsartiger Betrieb des Bearbeitungswerkzeugs am Elektrohandwerkzeug resultiert.

Die Erfindung ist nicht auf die beschriebenen und dargestellten Ausführungsbeispiele beschränkt. Sie umfaßt vielmehr auch alle fachmännischen Weiterbildungen im Rahmen des Erfindungsgedankens. So kann das erfindungsgemäße Verfahren sowie die zugehörige Schaltungsanordnung nicht nur bei Elektrohandwerkzeugen eingesetzt werden. Die Erfindung kann beispielsweise auch an Haushaltsgeräten, wie Küchenmaschinen, Mixer o. dgl., die u.a. zur Zerkleinerung von Nahrungsmitteln eingesetzt werden, Verwendung finden.

### Bezugszeichen-Liste:

- 1:: Elektromotor
- 2:: Brückengleichrichter
- 3:: Anschluß (für Netzspannung)
- 4:: elektronischer Leistungsschalter
- 5:: Steuerelektronik
- 6:: Widerstand
- 7:: Zener-Diode
- 8:: Kondensator
- 9:: Potentiometer
- 10:: erster Oszillator
- 11,11':: Puls (rechteckförmig)
- 12,12':: Pulspause
- 13:: zweiter Oszillator
- 14:: Widerstand (Shunt)
- 15:: Anschlußpunkt
- 16:: Triac-Koppler
- 17:: Diac
- 18:: Kondensator
- 19:: Diode
- 20:: Puls (angeschnittene Sinusschwingung)
- 21:: Auswerteschaltung
- 22:: Pulspause
- 23:: elektrischer Schalter (für Elektrowerkzeug)
- 24:: Schaltergehäuse
- 25:: Leiterplatte
- 26:: elektronisches Bauelement
- 27:: Betätigungsorgan
- 28:: Betätigungsstößel
- 29,29':: Pfeil
- 30:: Kontaktwippe
- 31:: Anschlußkontakt
- 32:: Schaltnocken
- 33,33':: Ende (der Kontaktwippe)
- 34:: Zugfeder
- 35:: Widerstandsbahn
- 36:: Schleifer
- 37:: Ansatz (am Betätigungsstößel)
- 38:: Substrat
- 39:: Einstellknopf
- 40:: Freilaufdiode
- 41:: ansteigende Flanke (von Rechteckpuls)
- 42:: Optokoppler
- 43:: Triac

## Patentansprüche

1. Verfahren zur Ansteuerung eines Elektromotors (1) in handgeführten Elektrowerkzeugen, wie Bohrmaschinen, Schraubmaschinen oder dergleichen mit folgenden Merkmalen:
- der Elektromotor (1) wird in einer ersten Betriebsart mit veränderbaren Pulsen (11, 11', 20) einer elektrischen Spannung (U) derart beaufschlagt, daß sich der Rotor des Elektromotors (1) mit einer einstellbaren Drehzahl (n₁, n₂) kontinuierlich bewegt;
- der Elektromotor (1) ist in eine zweite impulsartige Betriebsart umschaltbar;
- in der zweiten Betriebsart werden wenigstens Teile von wenigstens einzelnen Pulsen (11, 11', 20) durch Überlagerung einer Pulspause (12, 12', 22) mit einer Nullspannung derart ausgeblendet, daß sich der Rotor des Elektromotors (1) ruck- bzw. stoßartig mit der eingestellten Drehzahl bewegt.

2. Verfahren nach Anspruch 1, **dadurch gekennzeichnet, daß** die Ansteuerung des Elektromotors (1) mit Pulsen (11, 11', 20) einer ersten Frequenz (f1) erfolgt, daß die Pulspausen (12, 12', 20) mit einer zweiten Frequenz (f2), die insbesondere einstellbar oder fest vorgegeben ist, überlagert werden und daß die zweite Frequenz (f2) kleiner als die erste Frequenz (f1) ist, wobei vorzugsweise ganze Vielfache der Pulse (11, 11', 20) ausgeblendet werden.

3. Verfahren nach Anspruch 1 oder 2, **dadurch gekennzeichnet, daß** das Ausblenden der Pulse (11, 11', 20) durch den Benutzer manuell steuerbar ausgelöst wird oder daß das Ausblenden der Pulse (11, 11', 20) bei Überschreitung voreingestellter Grenzwerte, beispielsweise bei Überschreitung eines bestimmten Drehmoments, von der Ansteuerung selbsttätig ausgelöst wird.

4. Verfahren nach Anspruch 1, 2 oder 3, **dadurch gekennzeichnet, daß** ein gleichstromgespeister Elektromotor (1) in der ersten kontinuierlichen Betriebsart mittels einer Pulsweiten-Modulation zur Veränderung der Drehzahl angesteuert wird, wobei die Pulse (11, 11') dem Elektromotor (1) in Form von Rechteckpulsen mit der ersten Frequenz (f1) beaufschlagt werden und vorzugsweise in der zweiten impulsartigen Betriebsart synchronisiert zur ersten Frequenz (f1) Teile der Rechteckpulse, insbesondere ganze Vielfache der Rechteckpulse, mit der zweiten Frequenz (f2) ausgeblendet werden.

5. Verfahren nach Anspruch 1, 2 oder 3, **dadurch gekennzeichnet, daß** ein wechselstromgespeister Elektromotor (1) in der ersten kontinuierlichen Betriebsart mittels einer Phasenanschnitt-Steuerung zur Veränderung der Drehzahl angesteuert wird, wobei die Pulse (20) dem Elektromotor (1) in Form von angeschnittenen Sinusschwingungen mit der ersten Frequenz (f1) der Netzspannung beaufschlagt werden und vorzugsweise in der zweiten impulsartigen Betriebsart synchronisiert zur ersten Frequenz (f1) Teile der angeschnittenen Sinusschwingungen, insbesondere ganze Vielfache der angeschnittenen Sinusschwingungen, mit der zweiten Frequenz (f2) ausgeblendet werden.

6. Schaltungsanordnung zur Ansteuerung eines Elektromotors (1) in handgeführten Elektrowerkzeugen, wie Bohrmaschinen, Schraubmaschinen oder dergleichen, mit einer Steuerelektronik (5) und einem elektronischen Leistungsschalter (4), wie einem Triac, einem Transistor, einem IGBT oder dergleichen, der von der Steuerelektronik (5) derart geschaltet wird, daß über den elektronischen Leistungsschalter (4) veränderbare Pulse (11, 11', 20) einer elektrischen Spannung (U) an den Elektromotor (1) zum Betrieb des Elektromotors (1) in einer ersten kontinuierlichen Betriebsart mit einer einstellbaren Drehzahl (n₁, n₂) anlegbar sind, wobei die Steuerelektronik (5) Mittel zum Ausschalten des elektronischen Leistungsschalters (4) während wenigstens Teilen von wenigstens einzelnen Pulsen (11, 11', 10) enthält, so daß der Elektromotor (1) in eine zweite impulsartige Betriebsart umschaltbar ist, in der sich der Elektromotor (1) ruck- bzw. stoßartig mit der eingestellten Drehzahl (n₁, n₂) bewegt.

7. Schaltungsanordnung nach Anspruch 6, **dadurch gekennzeichnet, daß** die Mittel zum Ausschalten des elektronischen Leistungsschalters (4) manuell oder selbsttätig zuschaltbar sind, wobei für die selbsttätige Zuschaltung vorzugsweise eine Strommeßeinrichtung für den Motorstrom angeordnet ist, die insbesondere aus einem im Motorkreis befindlichen Widerstand (14) besteht, und wobei der von der Strommeßeinrichtung ermittelte Motorstrom der Steuerelektronik (5) zugeführt wird, in der wiederum bei Überschreitung eines voreingestellten Grenzwertes die Mittel zum Ausschalten des elektronischen Leistungsschalters (4) aktiviert werden.

8. Schaltungsanordnung nach Anspruch 6 oder 7, **dadurch gekennzeichnet, daß** die Steuerelektronik (5) insbesondere einen ersten Oszillator (10) zur Erzeugung einer ersten Frequenz (f1) zum Schalten des elektronischen Leistungsschalters (4) enthält und daß die Mittel zum Ausschalten des elektronischen Leistungsschalters (4) aus einen zweiten Oszillator (13) zur Erzeugung einer zweiten Frequenz (f2), die kleiner als die erste Frequenz (f1) ist, bestehen, wobei der zweite Oszillator (13) die Steuerelektronik (5), vorzugsweise den in der Steuerelektronik (5) befindlichen ersten Oszillator (10), taktweise mit der Frequenz (f2) sperrt.

9. Schaltungsanordnung nach Anspruch 8, **dadurch gekennzeichnet, daß** weitere Mittel zur Synchronisation des zweiten Oszillators (13) mit dem ersten Oszillator (10) angeordnet sind, so daß der elektronische Leistungsschalter (4) vorzugsweise während ganzer Vielfache der Pulse (11, 11', 20) der ersten Frequenz (f1) getaktet mit der zweiten Frequenz (f2) ausgeschaltet ist.

10. Schaltungsanordnung nach einem der Ansprüche 6 bis 9, **dadurch gekennzeichnet, daß** es sich um einen gleichstromgespeisten Elektromotor (1) mit Pulsweiten-Modulation oder um einen wechselstromgespeisten Elektromotor (1) mit Phasenanschnitt-Steuerung handelt, wobei die weiteren Mittel zur Synchronisation bei der Phasenanschnitt-Steuerung vorzugsweise aus einem Triac-Koppler (16) mit Nullpunktschaltung bestehen.

11. Schaltungsanordnung nach einem der Ansprüche 6 bis 10, **dadurch gekennzeichnet, daß** die Schaltungsanordnung in einem elektrischen Schalter (23) zur Drehzahleinstellung für ein Elektrohandwerkzeug angeordnet ist oder mit dem elektrischen Schalter (23) in Verbindung steht.

## Claims

1. Method for driving an electric motor (1) in manually guided electric tools, such as drilling machines, screwing machines or the like having the following features:
- the electric motor (1) is charged in a first mode of operation with variable pulses (11, 11', 20) of an electric voltage (U) such that the rotor of the electric motor (1) moves continually with an adjustable speed (n₁, n₂),
- the electric motor (1) can be switched into a second pulse-like mode of operation,
- in the second mode of operation at least portions of at least individual pulses (11, 11', 20) are blanked out by superposition of a pulse interval (12, 12', 22) with a zero voltage, such that the rotor of the electric motor (1) moves intermittently or abruptly at the set speed.

2. Method according to claim 1, **characterised in that** the electric motor (1) is driven by pulses (11, 11', 20) of a first frequency (f1), **in that** the pulse intervals (12, 12', 20) are superimposed by a second frequency (f2), which in particular can be adjusted or is preset, and **in that** the second frequency (f2) is smaller than the first frequency (f1), whereby preferably whole multiples of the pulses (11, 11', 20) are blanked out.

3. Method according to claim 1 or 2, **characterised in that** the blanking out of the pulses (11, 11', 20) is triggered manually by the user or the blanking out of the pulses (11, 11', 20) is triggered automatically by the drive on exceeding preset limit values, for example on exceeding a specific torque.

4. Method according to claim 1, 2 or 3, **characterised in that** a direct current fed electric motor (1) in the first continual mode of operation is driven by means of pulse width modulation for changing the speed, whereby the pulses (11, 11') are supplied to the electric motor (1) in the form of square-wave pulses with the first frequency (f1), and are preferably in the second pulse-like mode of operation synchronised with the first frequency (f1) portions of the square-wave pulses, in particular whole multiples of square-wave pulses, are blanked out by the second frequency (f2).

5. Method according to claim 1, 2 or 3, **characterised in that** an alternating current fed electric motor (1) in the first continual mode of operation is driven by means of a phase cutting control for changing the speed, whereby pulses (20) are supplied to the electronic motor (1) in the form of cut sine waves with the first frequency (f1) of the network voltage, and preferably in the second pulse-like mode of operation synchronised with the first frequency (f1) portions of the cut sine waves, in particular whole multiples of cut sine waves, are blanked out by the second frequency (f2).

6. Circuit arrangement for driving an electric motor (1) in manually guided tools, such as drilling machines, screwing machines or the like, with a control electronics (5) and an electronic power switch (4), such as a triac, a transistor, an IGBT or the like, which is switched by the control electronics (5), such that by means of the electronic power switch (4) variable pulses (11, 11', 20) of an electric voltage (U) can be supplied to the electric motor (1) to operate the electric motor (1) in a first continual mode of operation with an adjustable speed (n₁, n₂), whereby the control electronics (5) contains means for switching off the electronic power switch (4) during at least portions of at least individual pulses (11, 11', 10), so that the electric motor (1) can be switched into a second pulse-like mode of operation, in which the electric motor (1) moves intermittently or abruptly at the set speed (n₁, n₂).

7. Circuit arrangement according to claim 6, **characterised in that** the means for switching off the electronic power switch (4) can be switched on manually or automatically, whereby for automatic switching on preferably a current measuring device for the motor current is arranged, which in particular comprises a resistor (14) located in the motor circuit, and wherein the motor current detected by the current measuring device is fed to the control electronics (5), in which in turn on exceeding a preset limit value means are activated for switching off the electronic power switch (4).

8. Circuit arrangement according to claim 6 or 7, **characterised in that** the control electronics (5) contains in particular a first oscillator (10) for producing a first frequency (f1) for switching the electronic power switch (4), and **in that** the means for switching off the electronic power switch (4) comprise a second oscillator (13) for producing a second frequency (f2), which is smaller than the first frequency (f1), whereby the second oscillator (13) blocks the control electronics (5), preferably the first oscillator (10) located in the control electronics (5), in cycle with the frequency (f2).

9. Circuit arrangement according to claim 8, **characterised in that** further means are arranged for the synchronisation of the second oscillator (13) with the first oscillator (10), so that the electronic power switch (4) is preferably switched off during the whole multiples of the pulses (11, 11', 20) of the first frequency (f1) in cycle with the second frequency (f2).

10. Circuit arrangement according to one of claims 6 to 9, **characterised in that** it comprises a direct current fed electric motor (1) with pulse width modulation or an alternating current fed electric motor (1) with phase cutting control, whereby further means for synchronisation with the phase cutting control preferably comprise a triac coupler (16) with a zero circuit.

11. Circuit arrangement according to one of claims 6 to 10, **characterised in that** the circuit arrangement is arranged in an electric switch (23) for adjusting the speed for a electric manual tool or is connected with the electric switch (23).

## Revendications

1. Procédé pour commander un moteur électrique (1) dans des outils électriques à main, comme des perceuses, des visseuses ou analogues, ayant les caractéristiques suivantes :
- le moteur électrique (1) est alimenté, dans un premier mode de fonctionnement, par des impulsions modifiables (11,11',20) d'une tension électrique (U), de sorte que le rotor du moteur électrique (1) tourne de façon continue à une vitesse de rotation réglable (n₁,n₂) ;
- le moteur électrique (1) est commutable dans un second mode de fonctionnement par impulsions ;
- dans le second mode de fonctionnement, au moins des parties d'au moins des impulsions individuelles (11,11',20) sont supprimées par superposition d'une pause d'impulsion (12,12',22) ayant une tension nulle, de sorte que le rotor du moteur électrique (1) tourne par à-coups avec la vitesse de rotation réglée.

2. Procédé selon la revendication 1,
**caractérisé en ce que** la commande du moteur électrique (1) est effectuée par des impulsions (11,11',20) d'une première fréquence (f1), **en ce que** les pauses d'impulsion (12,12',22) sont superposées à une seconde fréquence (f2) qui, en particulier, peut être réglée ou est prédéfinie de façon fixe, et **en ce que** la seconde fréquence (f2) est plus petite que la première fréquence (f1), des multiples entiers des impulsions (11,11',20) étant avantageusement supprimés.

3. Procédé selon la revendication 1 ou 2,
**caractérisé en ce que** la suppression des impulsions (11,11',20) est déclenchée en pouvant être commandée de façon manuelle par l'utilisateur ou **en ce que** la suppression des impulsions (11,11',20) est déclenchée automatiquement lors du dépassement de valeurs limites préréglées, par exemple lors du dépassement d'un couple déterminé, par la commande.

4. Procédé selon la revendication 1, 2 ou 3,
**caractérisé en ce qu'**un moteur électrique alimenté en courant continu (1) est commandé, dans le premier mode de fonctionnement continu, par une modulation des largeurs d'impulsion pour modifier la vitesse de rotation, les impulsions (11,11') étant fournies au moteur électrique (1) sous forme d'impulsions rectangulaires à la première fréquence (f1) et, avantageusement, dans le second mode de fonctionnement par à-coups, de façon synchronisée par rapport à la première fréquence (f1), des parties des impulsions rectangulaires, en particulier des multiples entiers des impulsions rectangulaires, à la seconde fréquence (f2) sont supprimées.

5. Procédé selon la revendication 1,2 ou 3,
**caractérisé en ce qu'**un moteur électrique alimenté par du courant alternatif (1) est commandé, dans le premier mode de fonctionnement continu, au moyen d'une commande par coupe pour modifier la vitesse de rotation, les impulsions (20) étant fournies au moteur électrique (1) sous forme de sinusoïdes coupées à la première fréquence (f1) de la tension du réseau, et, avantageusement, dans le second mode de fonctionnement par à-coups, de façon synchronisée par rapport à la première fréquence (f1), des parties des sinusoïdes coupées, en particulier des multiples entiers des sinusoïdes coupées, à la seconde fréquence (f2) sont supprimées.

6. Agencement de circuit pour commander un moteur électrique (1) dans des outils électriques à main, comme des perceuses, des visseuses ou analogues, comportant une électronique de commande (5) et un commutateur de puissance électronique (4), comme un triac, un transistor, un IGBT ou analogue, qui est commuté par la commande électronique (5), de sorte que des impulsions modifiables (11,11',20) d'une tension électrique (U) sont fournies par l'intermédiaire du commutateur de puissance électronique (4) au moteur électrique (1) pour faire fonctionner le moteur électrique (1) dans un premier mode de fonctionnement continu avec une vitesse de rotation réglable (n₁,n₂), l'électronique de commande (5) comportant des moyens pour couper le commutateur de puissance électronique (4) pendant au moins des parties d'au moins des impulsions individuelles (11,11',20), de sorte que le moteur électrique (1) peut être commuté dans un second mode de fonctionnement par impulsions, dans lequel le moteur électrique (1) tourne par à-coups avec la vitesse de rotation réglée (n₁,n₂).

7. Agencement de circuit selon la revendication 6,
**caractérisé en ce que** les moyens pour couper le commutateur de puissance électronique (4) peuvent être mis en circuit de façon manuelle ou automatique, un dispositif de mesure de courant pour le courant du moteur étant avantageusement agencé, pour la mise en circuit automatique, lequel est constitué en particulier d'une résistance (14) se trouvant dans le circuit moteur, et le courant du moteur déterminé par le dispositif de mesure de courant étant amené à l'électronique de commande (5) où, à leur tour, lors du dépassement d'une valeur limite préréglée, les moyens pour couper le commutateur de puissance électronique (4) sont activés.

8. Agencement de circuit selon la revendication 6 ou 7,
**caractérisé en ce que** l'électronique de commande (5) comporte en particulier un premier oscillateur (10) pour engendrer une première fréquence (f1) pour la mise en circuit du commutateur de puissance électronique (4), et **en ce que** les moyens pour couper le commutateur de puissance électronique (4) sont constitués d'un second oscillateur (13) pour engendrer une seconde fréquence (f2), qui est plus petite que la première fréquence (f1), le second oscillateur (13) bloquant l'électronique de commande (5), avantageusement le premier oscillateur (10) se trouvant dans l'électronique de commande (5), en synchronisme avec la fréquence (f2).

9. Agencement de circuit selon la revendication 8,
**caractérisé en ce que** d'autres moyens pour la synchronisation du second oscillateur (13) avec le premier oscillateur (10) sont prévus, de sorte que le commutateur de puissance électronique (4) est avantageusement mis hors circuit pendant des multiples entiers des impulsions (11,11',20) de la première fréquence (f1) en synchronisme avec la seconde fréquence (f2).

10. Agencement de circuit selon une des revendications 6 à 9,
**caractérisé en ce qu'**il s'agit d'un moteur électrique (1) alimenté par du courant continu avec une modulation des largeurs d'impulsion ou d'un moteur électrique (1) alimenté par du courant alternatif avec une commande par coupe, les autres moyens pour la synchronisation lors de la commande par coupe étant avantageusement constitués d'un coupleur triac (16) à circuit neutre.

11. Agencement de circuit selon une des revendications 6 à 10,
**caractérisé en ce que** l'agencement de circuit est prévu dans un commutateur électrique (23) pour le réglage de la vitesse de rotation pour un outil électrique à main ou est relié au commutateur électrique (23).
